# EUROPEAN PATENT SPECIFICATION

(11) **EP 1 647 390 B1**
(45) Date of publication and mention of the grant of the patent: **08.10.2008**
(21) Application number: 05109338.3
(22) Date of filing: 07.10.2005
(51) Int. Cl.: B29C 47/30, B29C 47/14

(54) **Double flow channel for an extruder head**
Doppelströmungskanal für einen Extrusionskopf
Canal à double flux d'écoulement réglable pour une tête d'extrusion

(30) Priority: 13.10.2004 US 964010
(43) Date of publication of application: 19.04.2006
(73) Proprietor: THE GOODYEAR TIRE & RUBBER COMPANY, Akron, OH 44316-0001 (US)
(72) Inventor: Looman, Ernest Wilford, Jr., Tallmadge, OH Ohio 44278 (US); Turner, Bruce Joseph, Waddsworth, OH Ohio 44281 (US)
(74) Representative: Kutsch, Bernd

(56) References cited:
- EP-A- 1 186 397
- EP-A- 1 634 690
- WO-A-99/22927
- US-A- 4 945 807
- US-A- 4 990 293
- US-A1- 2002 117 772
- US-A1- 2004 185 132

## Description

### Technical Field

This invention relates to an apparatus for directing the flow of elastomeric material through an extruder head.

### Background of the Invention

In the art of extruding strips of material such as plastic or elastomeric, the use of an extruder having a heated barrel and a screw that provides shear energy to the material to be plasticized is well known. As the material is heated, it generally converts from a solid pellet or strip form into a strip of plasticized material at the end of the screw tip that projects the material into an extruder head. This extruder head generally has a single flow channel having a straight flow path that directs the plasticized material through the extruder head to an outlet or discharge die that forms the material into the proper predetermined cross-sectional profile.

It is common practice in the rubber industry to use a single flow channel to extrude tire treads. The utilization of multiple cavity extrusion has been achieved for component extrusions such as sidewalls, wedges, chafers, fillers and apexes. However, the use of multiple extrusions for treads has been more elusive, since it has been very difficult to make a uniform, precise extrudate required in today's tire treads. The dividing of the rubber flow into two angled channels has the disadvantage of causing a mass and velocity imbalance across the die. In the preparation of tire treads for example, this effect can have a detrimental effect on the product quality of the resultant tire since the accuracy with which the tread can be applied to the unvulcanized tire is reduced and an asymmetry in the molded tire, called conicity, can be created. For this reason, most manufacturers have chosen to utilize a single cavity tread extrusion system.

EP-A- 1186397 or US-A- 2004/0185132 describe an extruder head according to the preamble of claim 1. A similar extruder head is also known from WO-A- 99/22927.

### Summary of the Invention

The invention provides in a first aspect an extruder head for forming simultaneously two or more elastomeric strips of predetermined cross-sectional profiles from a material according to claim 1.

The invention provides in a second aspect a method of forming simultaneously two or more elastomeric strips of predetermined cross-sectional profiles from a material according to claim 9.

The dependent claims cover preferred embodiments of the invention.

### Brief Description of the Drawings

Fig. 1 is a top plan view of the extruder flow channel connected to an extruder on the upstream side of the material flow and to a profiling die on the downstream side of the channel flow, and
Fig. 2 is a cross-section taken from Fig. 1 along lines 2-2.

### Detailed Description of the Invention

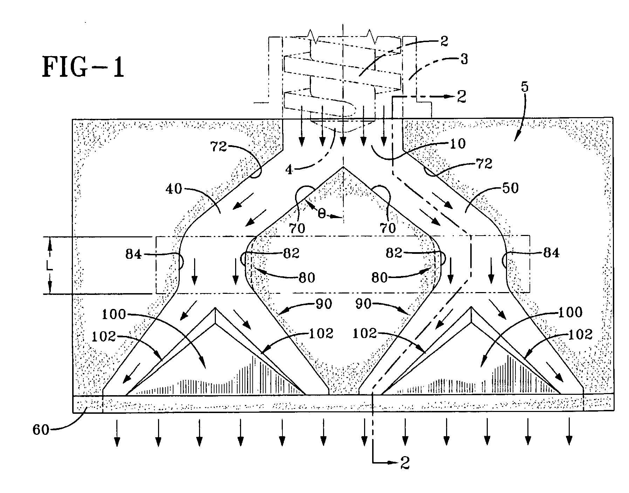

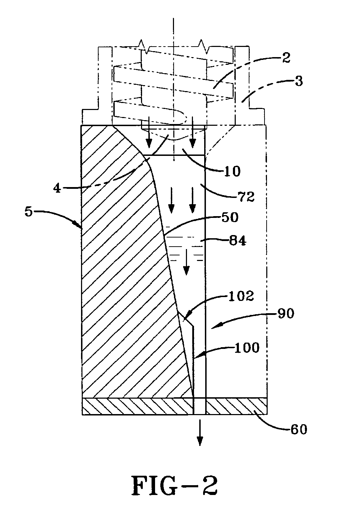

With reference to Figs. 1 and 2, an extruder (partially shown) has an extruder screw 2 with an extruder screw tip 4 enclosed in an extruder barrel 3. Attached to the extruder barrel is an extruder head 5. The extruder head has a flow channel 10 for receiving plastic or elastomeric material such as rubber. The flow channel 10 is further divided downstream into two flow channels 40, 50 for preforming the flow. Each channel 40, 50 has an outlet end for discharging the plasticized material through a die for forming the profile of the elastomeric strip to be produced. This die is commonly referred to as a profile die 60.

After the material flows from the extruder barrel 3 and enters the inlet of the flow channel 10, the mass flow is divided into two flow channels 40, 50. The flow channels are oriented at an angle θ in the range of 30-60 degrees, and preferably 50 degrees. As the material flows down the angled flow channels 40, 50, the material travels faster along the inner walls 70 than along the outside walls 72. Further, more of the mass of the material is concentrated along the inner wall 70. Thus the angled flow channel results in an uneven mass and velocity distribution, with a faster flowing mass more concentrated along the inner wall.

To counteract this flow imbalance, a transition section 80 is added prior to the flow discharge section 90. The transition section 80 comprises inner and outer flat sidewalls 82, 84 wherein the sidewalls entering and exiting the transition area are curved. The transition section 80 has a length L and a width W. Preferably the width about equals the length, and has a sufficient length L sized to stabilize the flow into a uniform mass profile. Thus the flow in the transition area is parallel to the inlet flow and the discharge flow. The width W is the distance between the inner sidewall 82 and the outer sidewall 84.

Since a disproportionate amount of mass of the material entering the transition area is near the inner wall 82, the transition area 80 functions to shift the mass towards the outer wall 84, so that the center of mass of the flow is centered in alignment with the downstream flow divertor. The transition section 80 has a centerline which is slightly offset towards the outer wall from the centerline of the flow discharge channel. The effect of the offset transition centerline is to shift the mass of the flow towards the outer wall, and thus into a more uniform distribution. The amount of centerline transition offset may depend upon the flow characteristics of the particular material selected. Typically for rubber, the offset may be in the range of 1 to 6 mm.

After the flow exits the transition area, it enters the flow discharge channel 90. Centered with each flow discharge channel is a flow divertor 100, which is preferably shaped like a wing, having sweeping leading edges 102. Each flow divertor is preferably symmetrical in design about its centerline. The flow divertor 100 functions to spread out the material into the desired width prior to flowing into the die 60.

## Claims

1. An extruder head comprising a flow inlet (10) for receiving a material to be extruded; and a first and a second flow channel (40, 50) communicating with an end of the flow inlet (10); wherein each flow channel (40, 50) has a transition section (80) having sidewalls (82, 84) and a centerline; wherein a first flow discharge section (90) is in fluid communication with the first flow channel (40) and a second flow discharge section (90) is in fluid communication with the second flow channel (50); and wherein each flow discharge section (90) has a divertor (100) centered therein, the divertor having a centerline; **characterized in that** the centerline of the transition section (80) is offset from the centerline of the divertor (100).

2. The extruder head of claim 1, wherein the sidewalls (82, 84) of the transition section (80) are flat and/or wherein the sidewalls (82, 84) where entering and exiting the transition section (80) are curved.

3. The extruder head of claim 1 or 2, wherein the transition section (80) has a length (L) which is sufficient to stabilize the flow of the material to be extruded into a uniform mass profile.

4. The extruder head of at least one of the previous claims, wherein the transition section (80) has a length (L) and a width, the width being 90% to 140 %, preferably 95% to 120%, of the length (L).

5. The extruder head of at least one of the previous claims, wherein the flow of the material in the transition section (80) is parallel to the flow of the material in the flow inlet (10) and is parallel to the flow of the material at the exit of the divertor (100).

6. The extruder head of at least one of the previous claims, wherein the centerline of the transition section (80) is offset towards the outer sidewall (84) from the centerline of the divertor (100).

7. The extruder head of at least one of the previous claims, wherein the offset is in the range of 1 mm to 6 mm.

8. The extruder head of at least one of the previous claims, wherein the divertor (100) is shaped like a wing having sweaping leading edges (102).

9. A method of forming simultaneously two or more elastomeric strips of predetermined cross-sectional profiles from a material, the method comprising the steps of:
(a) receiving the material from an extruder into a channel (10);
(b) dividing the material from the channel (10) into a first and a second angled flow channel (40, 50),
(c) straightening out the flow of the material in a transition section (80) of the first and second flow channel (40, 50);
(d) aligning the center of mass of the material with the center of a divertor (100) located in a discharge section (90) by offsetting the centerline of the transition section (80) from the centerline of the divertor (100); and
(e) discharging the material from the discharge section (90) into a die (60) and/or a preformer.

## Patentansprüche

1. Extrusionskopf, umfassend einen Strömungseinlass (10) zur Aufnahme eines zu extrudierenden Materials; und einen ersten und einen zweiten Strömungskanal (40, 50), die mit einem Ende des Strömungseinlasses (10) in Verbindung stehen; wobei jeder Strömungskanal (40, 50) einen Übergangsabschnitt (80) mit Seitenwänden (82, 84) und einer Mittellinie aufweist; wobei ein erster Strömungsabfuhrabschnitt (90) in Fluidverbindung mit dem ersten Strömungskanal (40) steht und ein zweiter Strömungsabfuhrabschnitt (90) in Fluidverbindung mit dem zweiten Strömungskanal (50) steht; und wobei jeder Strömungsabfuhrabschnitt (90) eine darin zentrierte Ableitvorrichtung (100) aufweist, wobei die Ableitvorrichtung eine Mittellinie aufweist; **dadurch gekennzeichnet, dass** die Mittellinie des Übergangsabschnitts (80) von der Mittellinie der Ableitvorrichtung (100) versetzt ist.

2. Extrusionskopf nach Anspruch 1, wobei die Seitenwände (82, 84) des Übergangsabschnitts (80) flach sind und/oder wobei die Seitenwände (82, 84), wo sie in den Übergangsabschnitt (80) eintreten oder aus diesem austreten, gekrümmt sind.

3. Extrusionskopf nach Anspruch 1 oder 2, wobei der Übergangsabschnitt (80) eine Länge (L) aufweist, die ausreicht, um den Fluss des zu extrudierenden Materials zu einem gleichförmigen Masseprofil zu stabilisieren.

4. Extrusionskopf nach mindestens einem der vorhergehenden Ansprüche, wobei der Übergangsabschnitt (80) eine Länge (L) und eine Breite aufweist, wobei die Breite 90% bis 140%, bevorzugt 95% bis 120%, der Länge (L) beträgt.

5. Extrusionskopf nach mindestens einem der vorhergehenden Ansprüche, wobei der Fluss des Materials in dem Übergangsabschnitt (80) parallel zu dem Fluss des Materials in dem Strömungseinlass (10) ist und parallel zu dem Fluss des Materials am Ausgang der Ableitvorrichtung (100) ist.

6. Extrusionskopf nach mindestens einem der vorhergehenden Ansprüche, wobei die Mittellinie des Übergangsabschnitts (80) von der Mittellinie der Ableitvorrichtung (100) zur äußeren Seitenwand (84) hin versetzt ist.

7. Extrusionskopf nach mindestens einem der vorhergehenden Ansprüche, wobei der Versatz im Bereich von 1 mm bis 6 mm liegt.

8. Extrusionskopf nach mindestens einem der vorhergehenden Ansprüche, wobei die Ableitvorrichtung (100) wie ein Flügel mit langgestreckten weitreichenden Vorderkanten (102) geformt ist.

9. Verfahren zum gleichzeitigen Formen von zwei oder mehr Elastomerstreifen mit vorbestimmten Querschnittsprofilen aus einem Material, wobei das Verfahren die Schritte umfasst des:
(a) Aufnehmens des Materials von einem Extruder in einen Kanal (10);
(b) Aufteilens des Materials von dem Kanal (10) in einen ersten und einen zweiten angewinkelten Strömungskanal (40, 50);
(c) Begradigens des Flusses des Materials in einem Übergangsabschnitt (80) des ersten und zweiten Strömungskanals (40, 50);
(d) Ausrichtens des Massezentrums des Materials zu dem Zentrum einer in einem Abfuhrabschnitt (90) befindlichen Ableitvorrichtung (100) durch Versetzen der Mittellinie des Übergangsabschnitts (80) von der Mittellinie der Ableitvorrichtung (100); und
(e) Abführens des Materials von dem Abfuhrabschnitt (90) in ein Extrusionswerkzeug (60) und/oder eine Vorformeinrichtung.

## Revendications

1. Tête d'extrudeuse comprenant une entrée d'écoulement (10) pour la réception d'une matière à extruder ; et un premier et un deuxième canal d'écoulement (40, 50) communiquant avec une extrémité de l'entrée d'écoulement (10) ; dans laquelle chaque canal d'écoulement (40, 50) possède une section de transition (80) possédant des parois latérales (82, 84) et une ligne médiane ; dans laquelle une première section d'évacuation d'écoulement (90) est mise en communication par fluide avec le premier canal d'écoulement (40) et une deuxième section d'évacuation d'écoulement (90) est mise en communication par fluide avec le deuxième canal d'écoulement (50) ; et dans laquelle chaque section d'évacuation d'écoulement (90) possède un élément de déviation (100) en position centrale, l'élément de déviation possédant une ligne médiane ; **caractérisé en ce que** la ligne médiane de la section de transition (80) est décalée par rapport à la ligne médiane de l'élément de déviation (100).

2. Tête d'extrudeuse selon la revendication 1, dans laquelle les parois latérales (82, 84) de la section de transition (80) sont plates et/ou dans laquelle les parois latérales (82, 84), à l'endroit de l'entrée et de la sortie de la section de transition (80), sont courbes.

3. Tête d'extrudeuse selon la revendication 1 ou 2, dans laquelle la section de transition (80) possède une longueur (L) qui est suffisante pour stabiliser l'écoulement de la matière à extruder pour obtenir un profil de masse uniforme.

4. Tête d'extrudeuse selon au moins une des revendications précédentes, dans laquelle la section de transition (80) possède une longueur (L) et une largeur, la largeur représentant de 90 % à 140 %, de préférence de 95 % à 120 % de la longueur.

5. Tête d'extrudeuse selon au moins une des revendications précédentes, dans laquelle l'écoulement de la matière dans la section de transition (80) est parallèle à l'écoulement de la matière dans l'entrée d'écoulement (10) et parallèle à l'écoulement de la matière à la sortie de l'élément de déviation (100).

6. Tête d'extrudeuse selon au moins une des revendications précédentes, dans laquelle la ligne médiane de la section de transition (80) est décalée en direction de la paroi latérale externe (80) par rapport à la ligne médiane de l'élément de déviation (100).

7. Tête d'extrudeuse selon au moins une des revendications précédentes, dans laquelle le décalage se situe dans la plage de 1 mm à 6 mm.

8. Tête d'extrudeuse selon au moins une des revendications précédentes, dans laquelle l'élément de déviation (100) est configuré à la manière d'une aile possédant des bords avant (102) procurant un balayage.

9. Procédé pour la formation simultanée de deux bandes élastomères ou plus possédant des profilés prédéterminés en section transversale, à partir d'une matière, le procédé comprenant les étapes consistant à :
(a) réceptionner la matière à partir d'une extrudeuse dans un canal (10) ;
(b) diviser la matière provenant du canal (10) en un premier et en un deuxième canal d'écoulement angulaire (40, 50) ;
(c) redresser l'écoulement de la matière dans une section de transition (80) du premier et du deuxième canal d'écoulement (40, 50) ;
(d) disposer le centre de la masse de la matière en alignement avec le centre d'un élément de déviation (100) disposé dans une section d'évacuation (90) en décalant la ligne médiane de la section de transition (80) par rapport à la ligne médiane de l'élément de déviation (100) ; et
(e) évacuer la matière de la section d'évacuation (90) dans une filière (60) et/ou dans un gabarit préconformateur.
